Europäisches Patentamt

(19) European Patent Office

Office européen des brevets

(11) Numéro de publication : **0 004 523**
**B1**

(12) FASCICULE DE BREVET EUROPÉEN

(45) Date de publication du fascicule du brevet :
03.02.82

(21) Numéro de dépôt : 79810026.9

(22) Date de dépôt : 16.03.79

(51) Int. Cl.³ : **G 11 B 23/02**, A 47 F 3/00,
B 65 D 85/67

(54) **Coffret pour boîtiers de cassettes.**

(30) Priorité : 21.03.78 CH 3085/78
09.03.79 CH 2288/79

(43) Date de publication de la demande :
03.10.79 (Bulletin 79/20)

(45) Mention de la délivrance du brevet :
03.02.82 Bulletin 82/05

(84) Etats contractants désignés :
BE CH DE FR GB IT LU NL SE

(56) Documents cités :
FR - A - 2 180 811
FR - A - 2 198 210
FR - A - 2 387 493
GB - A - 1 451 923
GB - A - 1 503 568
US - A - 3 627 398
US - A - 3 897 885
US - A - 3 907 116

(73) Titulaire : **Claire Corporation AG**
**Neugasse 23**
**CH-6300 Zoug ZG (CH)**

(72) Inventeur : **Somers, Giles Nicholas**
**5 qual du Mont-Blanc**
**CH-1201 Genève (CH)**

(74) Mandataire : **Kirker, Gaylord E. et al**
**c/o KIRKER & CIE 14, Rue du Mont-Blanc Case**
**postale 872**
**CH-1211 Genève 1 (CH)**

Imprimerie Jouve, 18, rue St-Denis, 75001 Paris, France

## Coffret pour boîtiers de cassettes

L'invention concerne un coffret destiné à recevoir au moins deux boîtiers de cassettes côte à côte.

Pour ranger des cassettes, une solution actuellement connue notamment par le brevet U.S. 3.763.994 consiste à prévoir des boîtiers parallélépipédiques renfermant un volet sur lequel est retenue la cassette, le volet pouvant basculer hors du boîtier pour permettre de prendre ou de mettre la cassette. Les boîtiers comprennent usuellement des moyens de fixation amovible permettant de les aligner en rangées.

Un inconvénient de cette solution est que l'on doit jeter le boîtier standard qui est livré par le commerçant avec la cassette lorsqu'on installe la cassette sur le volet, ce qui constitue un certain gaspillage. D'autre part, si l'on veut identifier la cassette que l'on a installée, il faut munir le boîtier spécial d'une étiquette car on ne peut généralement pas utiliser l'étiquette et l'index détaillé qui sont, normalement, placés dans le boîtier du commerce dans lequel la cassette est vendue.

Evidemment, on pourrait se contenter de déposer les boîtiers du commerce contenant les cassettes dans une simple valise pour éviter de jeter au rebut les boîtiers et utiliser les étiquettes et les index, mais cette solution élémentaire n'offre évidemment pas les agréments de la solution mentionnée en premier, selon laquelle des boîtiers spéciaux à volet basculant sont assemblés en rangée et donnent l'accès direct aux cassettes. Dans le cas de la valise, il faut d'abord ouvrir celle-ci, puis extraire un boîtier et sortir de celui-ci avec les deux mains la cassette, ce qui est beaucoup plus compliqué.

Une autre construction, selon le brevet britannique N° 1.451.923, comprend un coffret muni de supports pivotants agencés pour recevoir des cassettes nues, c'est-à-dire sans leur boîtier. Le support ne peut osciller que d'une faible quantité, juste suffisante pour enlever la cassette du support par glissement. Cette construction ne permet pas de ranger des cassettes dans leur boîtier et d'amener l'ensemble cassette et boîtier dans une position dégagée hors du coffret pour permettre d'ouvrir le boîtier sans le détacher du support. La présente invention fournit une solution permettant précisément de faire cela.

On connaît encore une autre construction, selon le brevet USA N° 3.627.398, et dans laquelle tout un groupe de tiroirs peut être engagé dans un coffret pour y être rangé, et dégagé en bloc du coffret tout en restant solidaire de celui-ci, chaque tiroir est prévu pour contenir une cassette qui peut en être extraite par un double mouvement de glissement et de pivotement, qui amène les tiroirs hors du coffret de sorte qu'on peut les ouvrir pour accéder à leur contenu. La présente invention vise à extraire de façon sélective d'un coffret une ou deux cassettes à la fois, dans leur boîtier, et de permettre alors l'ouverture de leur boîtier par basculement du volet oscillant classique, évitant ainsi d'extraire du coffret tout un groupe de tiroirs pour accéder à une seule cassette.

En outre, la présente invention a pour but de fournir une solution présentant la plupart des avantages des boîtiers spéciaux, mais permettant cependant de conserver le boîtier du commerce, par exemple le boîtier selon le brevet allemand N° 1.300.864, pour éviter le gaspillage et simplifier l'étiquetage et permettre le rangement des cassettes chacune dans son boîtier d'origine.

Le coffret pour boîtiers de cassettes selon l'invention comporte un caisson ouvert sur au moins une face pour permettre l'accès aux boîtiers. Il est caractérisé en ce qu'il comporte, du côté de la face d'accès, au moins un organe basculant pour tenir chacun au moins un boîtier et agencé pour retenir ce boîtier et lui permettre de basculer entre une position de repos, où le boîtier, fermé, est dans le caisson, et une position d'accès où le boîtier est sorti du caisson bien que toujours retenu par l'organe basculant, d'une manière permettant l'ouverture du boîtier pour y prendre ou y mettre une cassette, un axe de basculement pour cet ou ces organes basculants, dirigé perpendiculairement à un axe d'ouverture-fermeture du ou des boîtiers, étant prévu sur le coffret dans une position telle que, en position d'accès, chaque boîtier soit complètement dégagé du coffret et puisse être ouvert sans être détaché de l'organe basculant.

L'invention sera mieux comprise à l'aide de la description de quelques formes de réalisation données à titre d'exemples et en référence au dessin sur lequel :

La figure 1 représente en perspective une première forme de réalisation du coffret, certaines parties étant désassemblées,

la figure 2 est une vue de face du coffret de la figure 1,

la figure 3 illustre un agencement de plusieurs coffrets reliés de façon amovible,

la figure 4 est une vue latérale du coffret de la figure 1,

la figure 5 illustre l'agencement d'un boîtier sur un organe basculant ou cavalier,

les figures 6 et 7 représentent en coupe deux formes d'exécution d'un cavalier,

la figure 8 représente une autre forme d'exécution d'un cavalier,

la figure 9 illustre un détail d'un cavalier,

la figure 10 est une coupe selon A-A de la figure 9,

la figure 11 représente en perspective une autre forme de réalisation d'un coffret,

la figure 12 illustre un détail fonctionnel du coffret de la figure 11,

la figure 13 montre un cavalier double,

la figure 14 est une vue générale d'une autre forme de réalisation du coffret,

la figure 15 montre le fond du caisson du coffret, avec un organe basculant, certaines parties étant arrachées,

les figures 16 à 18 illustrent l'agencement d'une paire de boîtiers sur un organe basculant,

la figure 19 illustre une autre forme de réalisation du coffret,

la figure 20 montre un capot amovible,

la figure 21 montre une forme de réalisation de coffret comportant des organes basculants différents de ceux des figures précédentes,

la figure 22 montre un organe basculant du coffret de la figure 20,

les figures 23 et 24 illustrent une première manière de disposer une paire de boîtiers sur un organe basculant,

les figures 25 et 26 illustrent une seconde manière de disposer une paire de boîtiers sur un organe basculant.

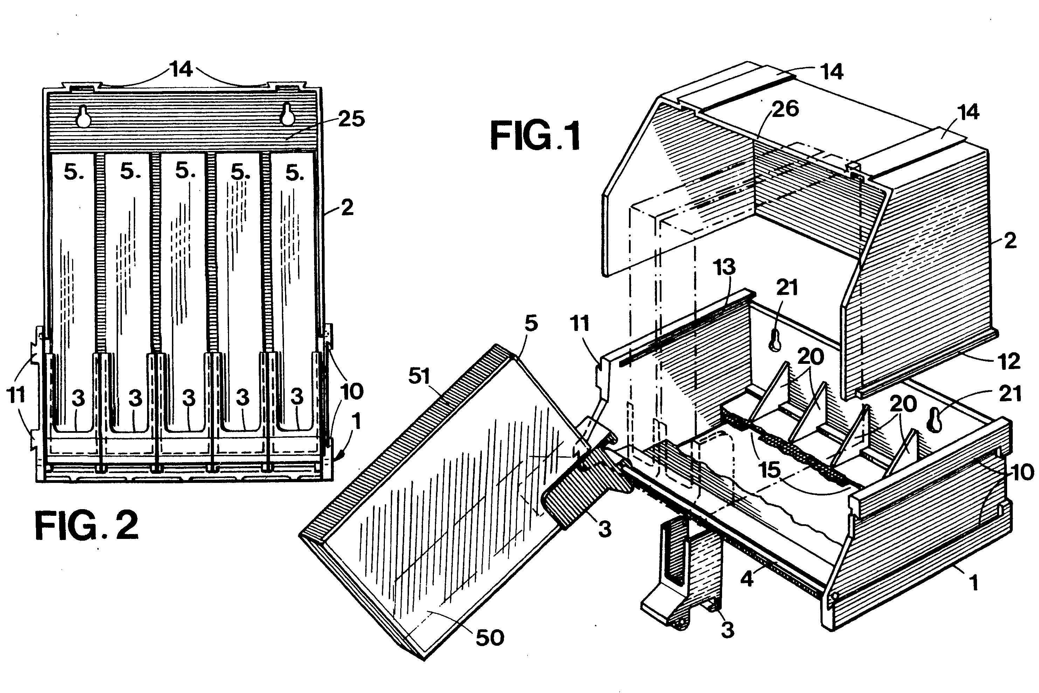

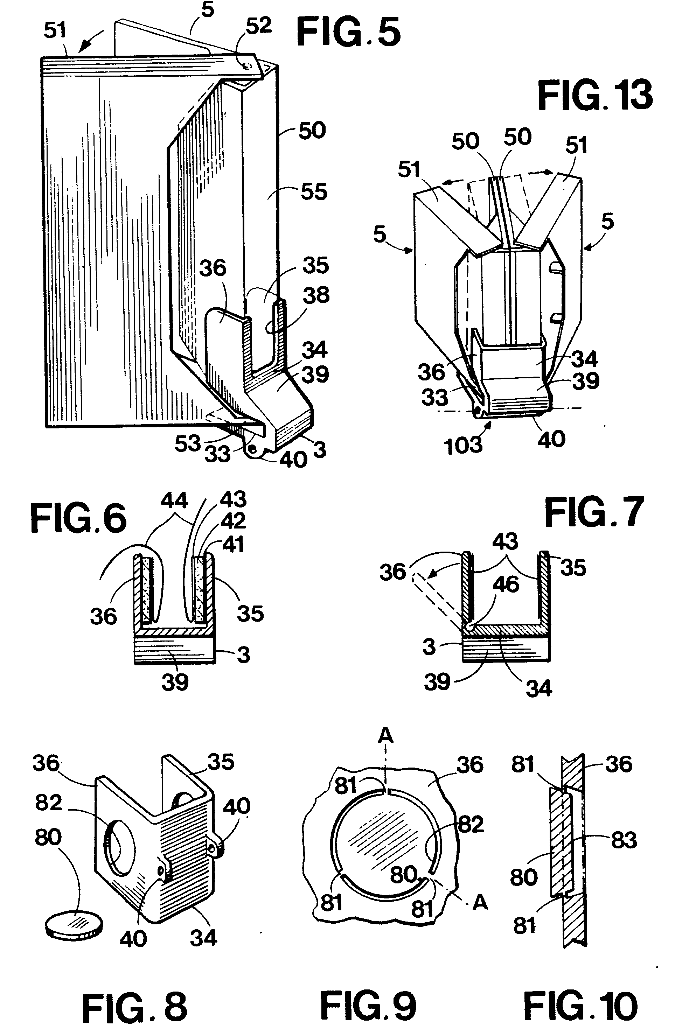

Le coffret de la figure 1 comprend un caisson 1 recevant une série de boîtiers de cassettes disposés en rangée dont deux sont représentés en traits interrompus. Des nervures 20 séparent les boîtiers adjacents pour caler chaque boîtier à sa place et éviter que deux boîtiers contigus ne s'entrechoquent. Comme le montre la figure 2, le caisson représenté 1 est prévu pour cinq boîtiers et possède une rangée de cinq organes basculants 3, appelés ci-après cavaliers disposés côte à côte sur un axe commun 4. Chaque cavalier saisit un boîtier au voisinage d'une portion extrémale de la longue face étroite 55 de la partie fixe 50 (fig. 5) du boîtier 5.

Le caisson 1 comporte sur sa face dorsale des ouvertures à baïonnettes 21, visibles à la figure 1, permettant de la fixer aisément de façon amovible à une paroi. Le caisson est également pourvu de moyens permettant sa fixation amovible à des caissons voisins à l'aide de rainures 10 destinées à coopérer avec les queues d'aigle 11 d'un caisson voisin.

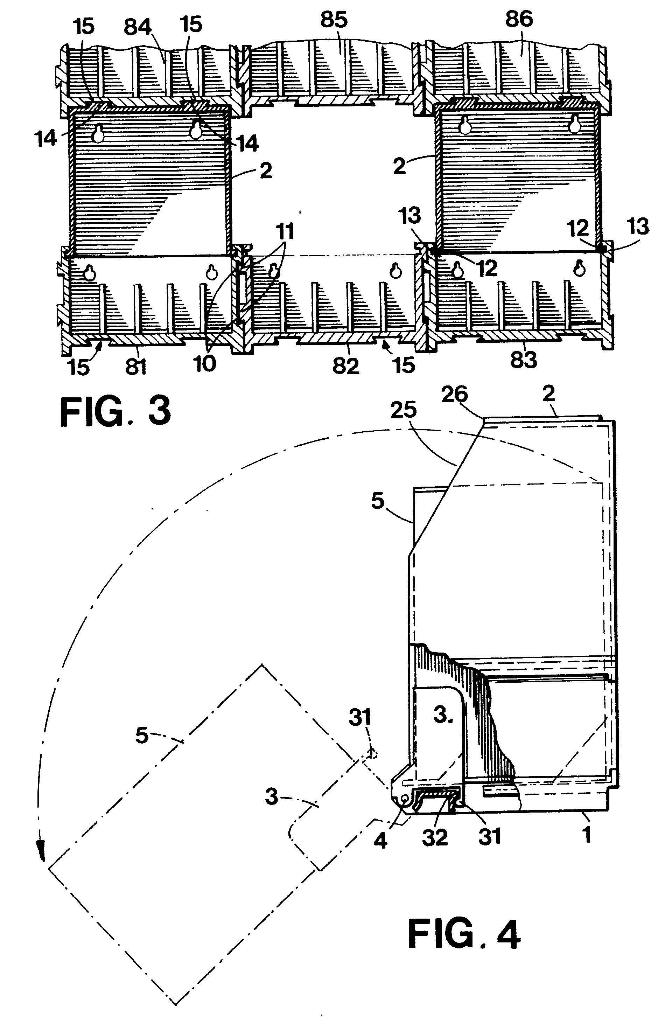

Le caisson comporte des moyens de liaison amovible à un capot 2 sous la forme de rainures 13 destinées à coopérer avec les saillies 12 du capot 2. A la partie supérieure du capot sont prévus des moyens de liaison amovible permettant de superposer encore un caisson, ces moyens comprenant des saillies 14 destinées à coopérer avec des rainures en queue d'aigle 15 ménagées dans la paroi de fond d'un caisson. On notera que le capot 2 laisse un espace 25 au-dessus de la rangée des boîtiers. Un tel espace offre le dégagement voulu pour la rotation du boîtier comme le montre la figure 4. Le capot 2 peut être utilisé comme une sorte de poignée pour saisir un coffret ou même une rangée de coffrets, l'espace 25 laissant suffisamment de place pour les doigts. Le bord 26 est en retrait par rapport à la face du coffret donnant accès aux boîtiers, pour améliorer l'équilibre lorsqu'on utilise le capot comme poignée. Le capot est un accessoire facultatif. Dans une variante il pourrait être partie intégrante du caisson 1.

La figure 3 illustre l'utilisation de ces moyens de liaison amovible pour former un ensemble comportant une rangée de trois caissons 81, 82, 83 ; les capots ne sont pas nécessaires pour constituer une telle rangée. Les caissons 81 et 83 sont complétés chacun par un capot 2 assurant la liaison à une rangée supérieure comprenant les caissons 84, 85, 86. Les épaisseurs sont exagérées pour rendre mieux visibles les moyens de liaison amovible 10, 11, 12, 13, 14 et 15. On notera que les capots s'encastrent partiellement dans le fond des caissons superposés 84, 86, ce qui contribue à la rigidité de l'ensemble.

Comme le montre la figure 4, les boîtiers 5 montés sur les cavaliers 3 sont retenus en position de repos à l'intérieur du caisson 1 à l'aide d'une saillie 32 coopérant avec un ergot 31 du cavalier. Cette disposition évite que le boîtier ne bascule trop facilement vers l'extérieur. Mais cette disposition présente également un autre avantage. Lorsqu'un cavalier est basculé vers l'extérieur, il est en porte-à-faux et a tendance à arracher l'axe vers l'extérieur. Ceci pourrait démonter l'axe s'il n'y avait pas l'agencement à ergot 31 et saillie 32 des cavaliers adjacents. En effet, grâce à cet agencement, les cavaliers situés de part et d'autre d'un cavalier sorti retiennent l'axe 4 car ils sont tenus en place par leurs ergots et jouent ainsi le rôle de paliers fixes proches du cavalier basculé. L'axe est par exemple une simple tige métallique.

Le boîtier 5 dont il est question ici est un boîtier standard similaire à celui du brevet allemand N° 1.300.864. Comme le montre la figure 5, le boîtier comporte essentiellement une partie fixe 50 recevant la cassette et une partie mobile 51 articulée sur la première comme un couvercle, à l'aide des prolongements 52 et 53. Le cavalier 3 est fixé à la partie fixe 50 dans une région extrémale de la longue face étroite 55. Le cavalier comporte une section générale en forme de U, les ailes du U étant constituées des parois latérales 35 et 36 et la partie médiane du U étant constituée par la paroi 34. La paroi 34 comporte un évidement 38 destiné à laisser apparente la face 55 dans la plus grande mesure possible. La partie 50 est pratiquement toujours en matériau transparent pour permettre de lire l'étiquette à travers la longue face étroite 55, ainsi que l'index détaillé, à travers les autres faces. Il importe donc que le cavalier masque aussi peu que possible les faces, et surtout la face 55 de cette partie en matériau transparent. C'est la raison pour laquelle est prévu l'évidement 38 de la paroi 34 du cavalier, qui ainsi laisse visible la majeure partie de la longue face 55. Une autre solution consiste à réaliser le cavalier entièrement en matériau transparent, tel que du polycarbonate ou du polystyrène.

Sur la paroi 36 est ménagée une fente 33 destinée à laisser passer le prolongement 53 lorsqu'on ouvre le boîtier. Un bossage 39 supporte un palier 40 destiné à coopérer avec l'axe 4.

Les figures 6 à 10 illustrent les moyens assurant l'adhérence du cavalier au boîtier. A la figure 6, les parois latérales 35 et 36 du cavalier 3 comportent sur leur face interne une certaine épaisseur de matière plastique mousse 42 fixée à la paroi par un adhésif. Sur la face opposée de la matière plastique mousse se trouve un adhésif 43 recouvert d'un ruban protecteur 44. Lorsqu'on installe un boîtier sur le cavalier, on l'engage entre les parois 35 et 36 en gardant à l'extérieur les bouts des rubans 44. Lorsque le boîtier est à la place correcte dans le cavalier, on tire sur les rubans 44, de sorte qu'ils découvrent l'adhésif 43, ce qui fixe le boîtier au cavalier. L'épaisseur de mousse 42 remédie aux légères inégalités de dimensions entre les boîtiers de différentes marques.

A la figure 7, la paroi 36 est reliée à la paroi 34 par une charnière 46 pour faciliter l'introduction du boîtier dans le cavalier. Ceci peut aussi remédier à de petites variations de dimensions.

La figure 8 représente un cavalier d'un type différent destiné à coopérer avec la région médiane de la longue face étroite 55 du boîtier. De préférence, ce cavalier est alors en matière plastique transparente. Pour assurer la fixation du cavalier au boîtier, des ouvertures 82 sont ménagées dans les faces latérales 35 et 36, et des pastilles 80 sont destinées à être engagées dans les ouvertures et collées au boîtier. La forme de la pastille correspond au moins partiellement au contour de l'ouverture 82. L'ouverture 82 peut être légèrement conique, la pastille pouvant avoir une conicité correspondante.

Les figures 9 et 10 illustrent une variante où la pastille 80 est retenue dans l'ouverture par des ponts 81 ; cette disposition permet de mouler la pastille d'une pièce avec le cavalier au lieu de constituer une pièces séparée.

La pastille est disposée légèrement en saillie sur la face extérieure de la paroi latérale du cavalier et comporte de l'adhésif sur sa face intérieure. Lorsqu'on installe un boîtier dans le cavalier, au moment où le boîtier est à sa place correcte on le fixe en pressant de l'extérieur sur les pastilles 80, ce qui brise les ponts 81 et amène la pastille à adhérer au boîtier par sa face interne grâce à l'adhésif.

L'adhésif des pastilles peut consister en un morceau de ruban dit « double face » encollé sur ses deux faces et de préférence, l'adhésif est protégé par une feuille détachable, par exemple en papier siliconisé ou en polyéthylène. Les pastilles ne sont pas obligatoirement circulaires, ni les ouvertures correspondantes.

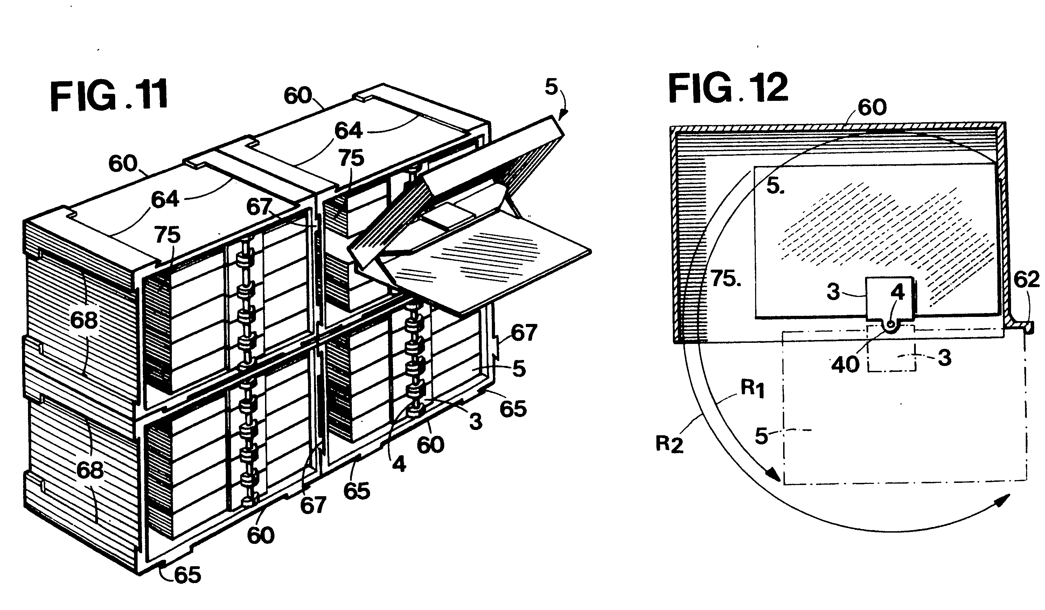

On comprendra que les différents moyens de fixation décrits ci-dessus en référence aux figures 6 à 10 peuvent concerner soit un cavalier destiné à être fixé en position extrémale sur la longue face étroite 55 comme aux figures 1 à 5, soit un cavalier destiné à être fixé en position médiane, comme illustré aux figures 11 et 12.

. La figure 11 illustre une autre forme de réalisation du coffret. Le caisson 60 encadre de quatre côtés la rangée de boîtiers et n'est donc pas destiné à recevoir un capot. Chaque caisson est pourvu de moyens de liaison amovible permettant d'assembler les caissons en lignes et colonnes. A cette fin, les rainures 68 sont agencées pour recevoir des saillies 67, et les rainures 64 sont agencées pour recevoir des saillies 65.

On notera qu'un dégagement 75 est prévu pour permettre la rotation du boîtier.

La figure 12 illustre un moyen prévu pour faciliter le positionnement d'un boîtier dans le cas où le cavalier est destiné à coopérer avec la région médiane de la longue face étroite 55. Un repos 62 permet de définir le positionnement du boîtier au moment de sa fixation au cavalier dans la position indiquée en traits interrompus. Les arcs R1 et R2 indiquent l'espace qui doit être laissé libre pour que le boîtier puisse basculer. L'arc R1 balaie l'espace 75 et l'arc R2 balaie notamment l'espace entre le fond du coffret 60 et le boîtier 5. R1 n'est pas égal à R2 car le cavalier 3 est légèrement décentré par rapport au boîtier 5.

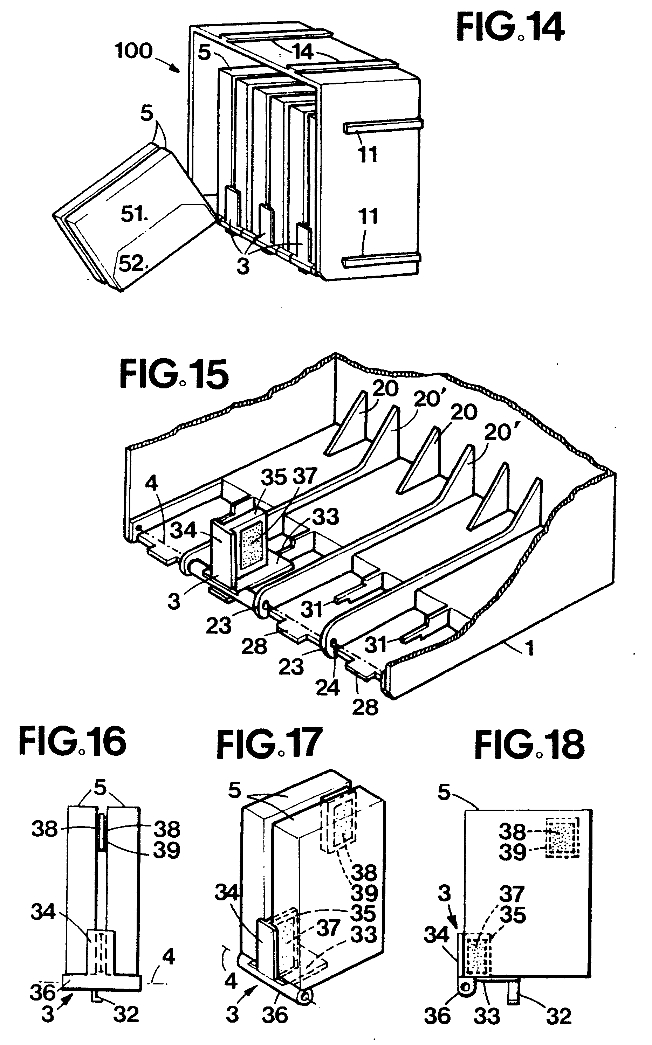

Concernant les cavaliers soit de l'un, soit de l'autre type, on peut également prévoir un cavalier double destiné à tenir deux boîtiers 5 qui basculeraient ensemble. Mais bien entendu, les parties mobiles 51 des boîtiers doivent alors être disposées sur les côtés extérieurs de la paire ainsi constituée, comme le montre la figure 13, pour un cavalier double 103.

Il va de soi que par le terme « cavalier » on entend ici tous organes basculants autour d'un axe tel que 4 et sur lesquels viennent s'appliquer et se fixer par collage un ou deux boîtiers de cassette.

Le coffret 100 de la figure 14 est prévu pour quatre paires de boîtiers 5 et comporte à cet effet quatre organes basculants 3, dont chacun retient une paire de boîtiers 5. Comme on le voit pour l'organe 3 qui se trouve en position ouverte, les boîtiers sont disposés avec la partie volet 51 apparente. Toutefois la position opposée est également envisageable et les deux dispositions seront décrites ci-après.

Le coffret représenté comporte des nervures en queue d'aigle 11 sur une face latérale et des rainures correspondantes, non visibles à la figure 14, sur la face opposée. Les nervures en queue d'aigle 11 et les rainures constituent des moyens de liaison amovibles permettant d'assembler plusieurs coffrets en une rangée.

Le coffret représenté comporte également des nervures supérieures 14 et des gorges en queue d'aigle correspondantes, sur la face de dessous, non visibles à la figure 14. Ces nervures et ces gorges constituent des moyens de liaison amovibles permettant de superposer plusieurs coffrets.

La figure 15 montre, avec arrachements, le fond du coffret. Il comporte des nervures 20, 20' destinées à séparer les boîtiers adjacents pour caler chaque boîtier à sa place et éviter que deux boîtiers contigus ne s'entrechoquent. Les organes basculants 3, dont un seul est représenté sur la figure 15, pivotent autour d'un axe 4 et sont articulés au coffret sur des pattes 23 munies d'ouvertures 24 pour l'axe 4. En regard de chaque organe basculant 3 se trouve une saillie 31 destinée à coopérer avec un ergot 32 (fig. 16 et 18) de l'organe basculant 3 pour le retenir de manière dégageable en position de repos. En regard et en dessous de chaque organe basculant se trouve une autre saillie 28 formant butée et destinée à limiter l'ouverture de l'organe basculant à la position représentée à la figure 14.

Comme le montrent les figures 16 à 18, chaque organe basculant comporte une plaquette de fond 33 et une plaquette médiane 35 partant perpendiculairement du milieu de la plaquette de fond 33, l'organe basculant ayant ainsi la forme générale d'un T. L'organe basculant représenté comporte en outre une plaquette frontale 34. Les trois plaquettes 33, 34, 35 délimitent deux trièdres trirectangles destinés à recevoir chacun le coin d'un boîtier 5, comme le montrent les figures 16 à 18. Les boîtiers 5 sont fixés à l'organe basculant par une portion adhésive 37 sur chaque face de la plaquette médiane 35. La portion adhésive consiste avantageusement en un morceau de bande adhésive double face collée par une face sur la plaquette 35, et dont l'autre face reste couverte d'une couche protectrice que l'on dégage au moment où l'on veut fixer un boîtier.

Une plaquette auxiliaire indépendante 39, munie d'adhésif 38 sur chaque face, est destinée à assurer une fixation supplémentaire entre les deux boîtiers d'une paire.

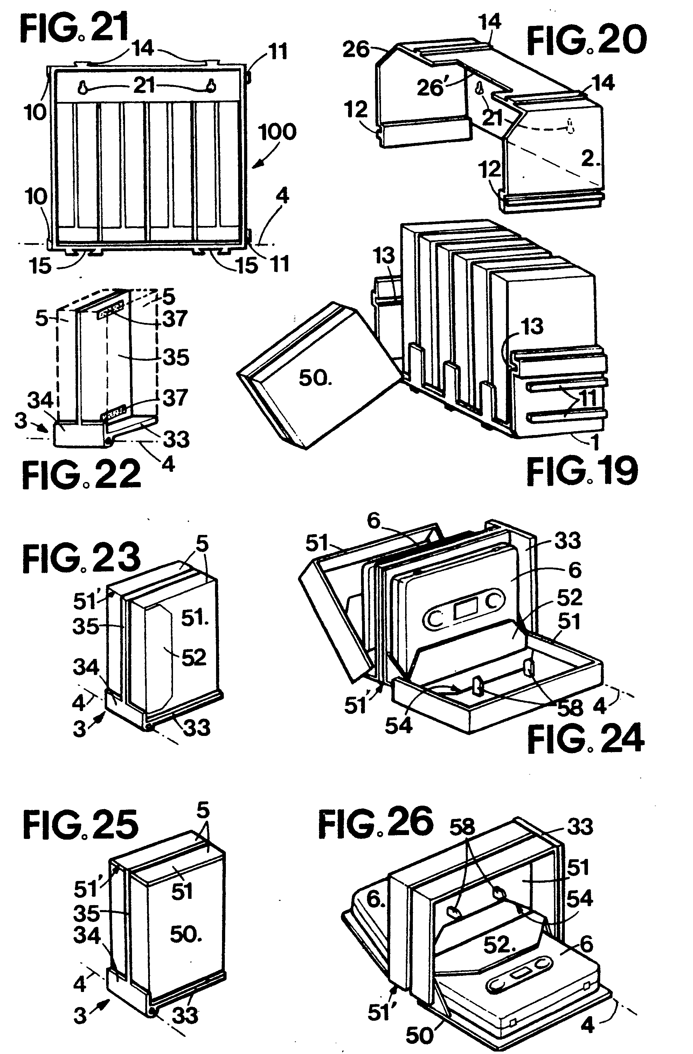

Le coffret de la figure 19 comporte une partie caisson 1 où sont disposés les organes basculants. L'un des organes basculants est représenté en position ouverte et les boîtiers sont disposés avec leur partie de logement de cassette 50 ayant sa grande face du côté extérieur. Mais ils pourraient aussi être disposés comme sur la figure 14. Le caisson comporte des moyens de liaison amovible 11 permettant de constituer des rangées de caissons.

Le caisson peut recevoir un capot 2 (fig. 20) et comporte à cet effet des rainures 13 destinées à coopérer avec des nervures 12 correspondantes sur le capot 2. Le capot 2 peut être utilisé comme une sorte de poignée, l'espace au-dessus des boîtiers laissant suffisamment de place pour les doigts. le bord 26 est en retrait par rapport à la face avant, celle où l'on accède aux boîtiers, pour améliorer l'équilibre lorsqu'on utilise le capot comme poignée. On remarque enfin les ouvertures à baïonnette 21 permettant de fixer le capot à une paroi de façon amovible. Bien entendu, de semblables ouvertures peuvent également être ménagées sur la paroi de fond du caisson 1 ou sur la paroi de fond du coffret de la figure 14.

Le coffret de la figure 21 comporte des organes basculants différents de ceux des figures précédentes. Comme le montre la figure 22, ils se distinguent par une plaque médiane 35 de dimensions comparables à une grande face allongée d'un boîtier, ce qui rend superflue l'utilisation d'une plaquette auxiliaire. Une plaquette médiane 35 relativement grande permet de mieux fixer les boîtiers 5. Ici, chaque face de la plaquette comporte deux régions adhésives 37.

On peut noter sur les figures 20 et 21 les nervures supérieures 14 destinées à coopérer avec des queues d'aigle correspondantes et sur la figure 21, les queues d'aigle 15 qui permettent de superposer des coffrets identiques. On peut noter également les nervures 11 et les rainures en queue d'aigle 10 qui permettent d'assembler plusieurs coffrets en rangée.

A la figure 23, les boîtiers 5 sont fixés avec leurs volets 51 vers l'extérieur. On distingue le rebord 52 de la partie constituant le logement de la cassette, cette partie étant généralement transparente alors que le volet est souvent opaque. A la figure 24, l'organe basculant est représenté en position ouverte et les volets 51 des deux boîtiers 5 sont ouverts, rendant ainsi accessibles les cassettes 6. Une découpure 54 est prévue dans le volet 51 pour recevoir le rebord 52 lorsque la cassette 6 coopère avec les ergots 58, empêchant les moyeux de la cassette de tourner.

A la figure 25, les boîtiers sont fixés par leurs volets 51, ceux-ci étant à l'intérieur. On distingue le dos de la partie de logement 50 de la cassette. A la figure 26, l'organe basculant est représenté en position ouverte et les parties de logement 50 sont pivotées par rapport aux volets et les cassettes 6, dégagées des ergots 58 d'immobilisation des moyeux, sont ainsi accessibles.

Pour faciliter la compréhension des figures 23 à 26, on a indiqué sur chacune d'elles la position de l'arête 51' dans l'une de ses deux positions extrêmes d'oscillation ou basculement autour de l'axe 4.

On préfère généralement la disposition des figures 23 et 24, car la cassette 6 n'a pas tendance à glisser hors de son logement lorsque le boîtier est ouvert.

**Revendications**

1. Coffret pour boîtiers de cassettes destiné à recevoir au moins deux boîtiers (5) côte à côte, comportant un caisson (1) ouvert sur au moins une face pour permettre l'accès aux boîtiers, caractérisé en ce qu'il comporte, du côté de la face d'accès, au moins un organe basculant (3) pour tenir chacun au moins un boîtier (5) et agencé pour retenir ce boîtier (5) et lui permettre de basculer entre une position de repos, où le boîtier, fermé, est dans le caisson (1), et une position d'accès où le boîtier est sorti du caisson bien que toujours retenu par l'organe basculant (3), d'une manière permettant l'ouverture du boîtier (5) pour y prendre ou y mettre une cassette (6), un axe de basculement (4) pour cet ou ces organes basculants (3), dirigé perpendiculairement à un axe d'ouverture-fermeture (52, 53) du ou des boîtiers, étant prévu sur le caisson dans une position telle que, en position d'accès, chaque boîtier (5) soit complètement dégagé du caisson (1) et puisse être ouvert sans être détaché de l'organe basculant (3).

2. Coffret selon la revendication 1, caractérisé en ce que chaque organe basculant (3) est agencé pour retenir une paire de boîtiers (5) s'ouvrant, en position d'accès, de deux côtés opposés.

3. Coffret selon la revendication 1, caractérisé en ce que le caisson est ouvert sur une deuxième face adjacente et perpendiculaire à la face d'accès.

4. Coffret selon la revendication 3, caractérisé en ce que le caisson (1) comporte des moyens de fixation amovible (13) d'un capot (2) sur la deuxième face.

5. Coffret selon la revendication 4, caractérisé par un capot (2) fixé de façon amovible au caisson (1) pour le compléter du côté de ladite deuxième face ouverte.

6. Coffret selon la revendication 5, caractérisé en ce que le capot (2) comporte des moyens (14) permettant la fixation amovible d'un caisson (1) superposé, qui comporte des moyens complémentaires (15), le capot (2) étant agencé de manière à constituer une poignée (26) en l'absence d'un caisson (1) superposé.

7. Coffret selon la revendication 5, caractérisé en ce que le capot (2) comporte une face dorsale munie d'ouvertures à baïonnette (21) pour sa fixation à une paroi.

8. Coffret selon la revendication 1, caractérisé en ce que le caisson (1) comporte une face dorsale munie d'ouvertures à baïonnette (21) pour sa fixation à une paroi.

9. Coffret selon la revendication 1, caractérisé en ce que les organes basculants sont agencés pour coopérer avec une portion du boîtier (5) située vers la région médiane de l'une des deux parties principales articulées du boîtier (fig. 11).

10. Coffret selon la revendication 1, caractérisé en ce que les organes basculants (3) sont agencés pour coopérer avec une portion du boîtier (5) située vers une région extrémale de l'une des deux parties principales articulées du boîtier (fig. 1).

11. Coffret selon la revendication 10, caractérisé par des moyens (31) pour retenir, de manière dégageable, l'organe basculant (3) en position de repos.

12. Coffret selon la revendication 1, caractérisé en ce que les organes basculants (3) sont des cavaliers (fig. 6) qui ont une section en forme générale de U dont la partie médiane comprend une articulation (40) pour permettre le basculement, et dont les branches (35, 36) comportent des moyens (42) assurant l'adhérence du cavalier à la partie fixe du boîtier.

13. Coffret selon la revendication 12, caractérisé en ce que les moyens assurant l'adhérence comprennent au moins une pastille (80) enduite d'adhésif (83) et au moins une ouverture (82) de forme correspondante à la pastille, ménagée sur une face (36) constituant une branche de U.

14. Coffret selon la revendication 13, caractérisé en ce que la pastille (80) est logée dans l'ouverture (82) et retenue en position rétractée par des ponts (81) destinés à être brisés pour permettre l'enfoncement de la pastille dans l'ouverture pour qu'elle adhère au boîtier, lorsqu'on installe un boîtier.

15. Coffret selon la revendication 12, caractérisé par une charnière (46) entre l'une au moins (36) des branches du U et la partie médiane (34) du U.

16. Coffret selon la revendication 1, caractérisé en ce que le caisson (1) comporte des moyens de liaison amovible (10, 11) avec des caissons adjacents pour former une rangée.

17. Coffret selon la revendication 1, caractérisé en ce que le caisson (1) comporte une partie supérieure formant capot (2) et des moyens de liaison amovible (12, 13) permettant de réaliser une superposition de coffrets.

18. Coffret selon la revendication 1, caractérisé en ce que chaque organe basculant (3) présente en coupe la forme générale d'un T (fig. 17), avec une plaquette de fond (33) et, à partir du milieu de cette dernière, une plaquette médiane (35) perpendiculaire à la plaquette de fond (33) et garnie sur chaque face d'adhésif (37) pour retenir les boîtiers (5).

19. Coffret selon la revendication 18, caractérisé en ce que l'organe basculant (3) comporte une plaquette frontale (34), perpendiculaire aux deux autres plaquettes (33, 35) et ayant un bord commun avec la plaquette de fond (33), l'ensemble des trois plaquettes délimitant deux trièdres trirectangles de part et d'autre de la plaque médiane (35) et destinés à recevoir chacun le coin d'un boîtier (5).

20. Coffret selon la revendication 18 ou 19, caractérisé en ce que la plaquette médiane (35) est de dimension restreinte par rapport aux dimensions de la plus grande face d'un boîtier (5) et en ce qu'il comporte, pour chaque organe basculant (3), une pièce auxiliaire (39) garnie d'adhésif (38) sur chaque face et destinée à assurer une liaison supplémentaire entre les deux boîtiers (5) d'une paire montés sur un organe basculant (3).

**Claims**

1. Coffer for cassette boxes intended to receive at least two cassette boxes (5) side by side, comprising a frame (1) which is open on at least one face to provide access to the boxes, characterised in that it includes, on the side of the access face, at least one swinging member (3) each to accept at least one box (5) and arranged to hold box (5) and allow it to swing between a rest position, where the box, closed, is within the frame (1), and an accessible position where the box is outside of the frame although still held by the swinging member (3), thus allowing the box (5) to be opened in order to remove or replace a cassette (6), a rotation axis (4) for the swinging member or members (3), which is perpendicular to an open-shut axis (52, 53) of the box or boxes, being positioned on the frame so that, in the access position, each box (5) is outside of the frame (1) and can be opened without being removed from the swinging member (3).

2. Coffer according to claim 1, characterised in that each swinging member (3) is arranged to hold a pair of boxes (5) which are openable, in the accessible position, on two opposite sides.

3. Coffer according to claim 1, characterised in that the frame (1) is open on a second face adjacent and perpendicular to the access face.

4. Coffer according to claim 3, characterised in that the frame (1) includes removable means of fixing (13) a hood (2) onto the second face.

5. Coffer according to claim 4, characterised in that a hood (2) fixed removably to the frame (1) to fill the side of the said second open face.

6. Coffer according to claim 5, characterised in that the hood (2) includes means (14) for removably connecting it to a superposed frame (1) which comprises complementary means (15), the hood (2) being arranged so as to form a carrying handle (26) if no superposed frame (1) is present.

7. Coffer according to claim 5, characterised in that the hood (2) includes a rear face provided with bayonet holes (21) to permit suspension against a wall.

8. Coffer according to claim 1, characterised in that the frame (1) includes a rear face provided with bayonet holes (21) to permit suspension against a wall.

9. Coffer according to claim 1, characterised in that the swinging members (3) are arranged to cooperate with a portion of the box (5) situated towards the central area of one of the two principal articulated parts of the box (fig. 11).

10. Coffer according to claim 1, characterised in that the swinging members (3) are arranged to cooperate with a portion of the box (5) situated towards an extremity of one of the two principal articulated parts of the box (fig. 1).

11. Coffer according to claim 10, characterised in that means (31) can releasably retain the swinging member (3) in closed position.

12. Coffer according to claim 1, characterised in that the swinging members (3) are box holders (figs 6-10) having in general a U-shaped section of which the centre part comprises hinges (40) to allow the swinging movement, the side walls (35, 36) of which comprise means (42) to adhere the box holder to the part of the box to be fixed.

13. Coffer according to claim 12, characterised in that the means of adhering comprise at least one pastille (80) coated with adhesive (83) and at least one opening (82) of shape corresponding to the pastille, situated on a face (36) comprising a side wall of the U.

14. Coffer according to claim 13, characterised in that the pastille (80) is held in the opening (82) in a raised position by connecting strips (81) which can be broken to allow the pastille to be pushed into the opening and thus adhere to the box, when a box is to be installed.

15. Coffer according to claim 12, characterised in that a hinge (46) is provided between at least one (36) of the side walls of the said U and the centre part (34) of the said U.

16. Coffer according to claim 1, characterised in that the frame (1) comprises removable means (10, 11) of joining onto adjacent frames to form a row.

17. Coffer according to claim 1, characterised in that the frame (1) comprises an upper part forming a hood (2) and means (12, 13) which permit removably superimposing other coffers.

18. Coffer according to claim 1, characterised in that each swinging member (3) has a section with the general shape of a T (fig. 17), with a base plate (33) and, in the centre of said base plate, a centre plate (35) perpendicular to the base plate (33) and coated adhesively on each face (37) to hold the boxes (5).

19. Coffer according to claim 18, characterised in that the swinging member (3) comprises a frontal plate (34), perpendicular to the two other plates (33, 35) and having a common edge with the base plate (33), the assembly of the three plates defining two trihedral trirectangles on each side of the centre plate (35) each intended to receive the corner of a box (5).

20. Coffer according to claim 18 or 19, characterised in that the centre plate (35) has a smaller size compared to the dimensions of the largest face of a box (5) and comprising, for each swinging member (3), an auxiliary piece (39) coated with adhesive (38) on each face and intended to ensure a supplementary connection between the two boxes (5) of a pair mounted on a swinging member (3).

**Ansprüche**

1. Behälter für Kassettengehäuse um mindestens zwei Gehäuse (5) nebeneinander aufzunehmen, wobei der Behälter einen Kasten (1) enthält, der mindestens auf einer Seite offen ist um den Zugang zu den Gehäusen zu gewährleisten, dadurch gekennzeichnet, dass er auf der Zugangsseite mindestens eine kippbare Befestigung (3) enthält, welche jede mindestens ein Gehäuse (5) hält und so ausgebildet ist, dass dieses Gehäuse (5) zurückgehalten wird und dass es zwischen einer Ruhestellung, in welcher das Gehäuse verschlossen im Kasten (1) steht, und einer Zugangsstellung, in welcher das Gehäuse aus dem Kasten herausgenommen aber immer noch von der kippbaren Befestigung (3) gehalten ist, kippen kann und zwar in einer Weise, dass das Gehäuse (5) geöffnet werden kann um die Kassette (6) zu entnehmen oder zu ersetzen, wobei die Kippachse (4) für diese kippbare Befestigung oder diese kippbaren Befestigungen (3), welche senkrecht zu einer Oeffnungs-/Schliessungs-Achse (52, 53) des Gehäuses oder der Gehäuse steht, in der Weise am Kasten vorgesehen ist, dass in der Zugangsstellung jedes Gehäuse (5) ausserhalb des Kastens (1), ganz ungehemmt durch den Kasten und ohne vor der kippbaren Befestigung (3) gelöst zu werden, geöffnet werden kann.

2. Behälter gemäss Anspruch 1, dadurch gekennzeichnet, dass jede kippbare Befestigung (3) so ausgebildet ist, dass sie ein Gehäusepaar (5) zurückhält, wobei in der Zugangsstellung diese Gehäuse (5) sich auf entgegengesetzten Seiten öffnen.

3. Behälter gemäss Anspruch 1, dadurch gekennzeichnet, dass der Kasten auf einer zweiten Seite, welche anliegend an der Gehäusezugangsseite und senkrecht zu ihr steht, offen ist.

4. Behälter gemäss Anspruch 1, dadurch gekennzeichnet, dass der Kasten (1) auf der zweiten Seite abnehmbare Befestigungsmittel (13) einer Abdeckung (12) trägt.

5. Behälter gemäss Anspruch 4, durch eine am Kasten (1) abnehmbare Abdeckung gekennzeichnet, um den Kasten auf der zweiten offenen Seite zu ergänzen.

6. Behälter gemäss Anspruch 5, dadurch gekennzeichnet, dass die Abdeckung (2) Mittel (14) aufweist, welche die lösbare Befestigung eines überlagerten Kasten (1) gestattet, wobei dieser überlagerte Kasten komplementäre Befestigungsmittel (15) aufweist und die Abdeckung (2) bei Abwesenheit des überlagerten Kastens (1) als Griff ausgebildet ist.

7. Behälter gemäss Anspruch 5, dadurch gekennzeichnet, dass die Abdeckung (2) eine Rückseite mit Bajonettöffnungen (21) für ihre Befestigung an einer Wand aufweist.

8. Behälter gemäss Anspruch 1, dadurch gekennzeichnet, dass der Kasten (1) eine Rückseite mit Bajonettöffnungen (21) für seine Befestigung an einer Wand aufweist.

9. Behälter gemäss Anspruch 1, dadurch gekennzeichnet, dass die kippbaren Befestigungen so angeordnet sind, dass sie mit einem Teil des Gehäuses (5), der nahe bei der mittleren Zone eines der beiden beweglichen Hauptteile des Gehäuses gelegen ist, zusammen wirken (Fig. 11).

10. Behälter gemäss Anspruch 1, dadurch gekennzeichnet, dass die kippbaren Befestigungen (3) so angeordnet sind, dass sie mit einem Teil des Gehäuses (5), der nahe einer Endzone einer der beiden beweglichen Hauptteile des Gehäuses gelegen ist, zusammenwirken (Fig. 1).

11. Behälter gemäss Anspruch 11, gekennzeichnet durch Mittel (31) welche die kippbaren Befestigungen (3) in der Ruhestellung lösbar zurückhalten.

12. Behälter gemäss Anspruch 1, dadurch gekennzeichnet, dass die kippbaren Befestigungen (3) Reiter sind (Fig. 6), die im Schnitt die allgemeine Form eines U aufweisen, dessen Mittelteil ein Gelenk (4) für die Kippbewegung aufweist und dessen Seitenarme (35, 36) Haftmittel (42) tragen, damit der Reiter am festen Gehäuseteil haftet.

13. Behälter gemäss Anspruch 12, dadurch gekennzeichnet, dass die Haftmittel mindestens ein mit Haftkleber (83) bedecktes Täfelchen (8) und mindestens eine dem Täfelchen entsprechende Oeffnung (82), welche in einem Seitenarm der U bildenden Seite (36) angebracht ist, umfassen.

14. Behälter gemäss Anspruch 13, dadurch gekennzeichnet, dass das Täfelchen (80) in der Oeffnung (82) untergebracht und durch Stege (81) in eingezogener Lage zurückgehalten wird, wobei die Stege zerbrochen werden um das Einschieben des Täfelchens in die Oeffnung zu gestatten, damit es am Gehäuse haftet wenn man ein Gehäuse einbaut.

15. Behälter gemäss Anspruch 12, gekennzeichnet durch ein Scharnier (46) zwischen mindestens eines Seitenarmes (36) des U und dem Mittelteil (34) des U.

16. Behälter gemäss Anspruch 1, dadurch gekennzeichnet, dass der Kasten (1) abnehmbare verbindungsmittel (10,11) zu anliegenden kasten aufweist, um eine Reihe zu bilden.

17. Behälter gemäss Anspruch 1, dadurch gekennzeichnet, dass der Kasten (1) einen oberen Teil, der eine Abdeckung (2) bildet, und abnehmbare Verbindungsmittel (12,13), um eine Ueberlagerung von Kasten zu ermöglichen, aufweist.

18. Behälter gemäss Anspruch 1, dadurch gekennzeichnet, dass jede kippbare Befestigung (3) im Schnitt die allgemeine Form eines T aufweist (Fig. 17) mit einem Basisplättchen (33) und von der Mitte dieses letzteren aus einem, senkrecht zum Basisplättchen (33) und auf jeder Seite mit Haftkleber (37) versehenen, mittleren Plättchen (35), damit die Gehäuse (5) zurückgehalten werden.

19. Behälter gemäss Anspruch 18, dadurch gekennzeichnet, dass die kippbare Befestigung (3) ein Frontplättchen (34) aufweist, welches senkrecht zu den beiden anderen Plättchen (33, 35) steht und einen gemeinsamen Rand mit dem Basisplättchen (33) besitzt, wobei die drei Plättchen zwei dreiflächige Raumwinkel, mit je drei rechten Winkeln, auf jeder Seite des mittleren Plättchens (35) bilden, damit jeder Raumwinkel die Ecke eines Gehäuses (5) aufnehmen kann.

20. Behälter gemäss Anspruch 18 oder 19, dadurch gekennzeichnet, dass das mittlere Plättchen (35) bescheidene Abmessungeï verglichen mit den Abmessungen der grössten Seite eines Gehäuses (5) aufweist und dass der Behälter für jede kippbare Befestigung (3) ein auf beiden Seiten mit Haftklebern (38) versehenen Hilfsplättchen (39) aufweist, damit eine zusätzliche Verbindung zwischen den beiden Gehäusen (5) eines Paares auf einer kippbaren Befestigung (3) gewährleistet ist.

**FIG. 1**

**FIG. 2**

0 004 523

FIG. 3

FIG. 4

FIG.5

FIG.13

FIG.6

FIG.7

FIG.8

FIG.9

FIG.10

FIG. 12

FIG. 11

0 004 523

FIG.14

FIG.15

FIG.16          FIG.17          FIG.18

5

**FIG. 21**

**FIG. 20**

**FIG. 22**

**FIG. 19**

**FIG. 23**

**FIG. 24**

**FIG. 25**

**FIG. 26**